# EUROPÄISCHE PATENTANMELDUNG

(11) **EP 0 607 873 A2**
(43) Veröffentlichungstag der Anmeldung: **27.07.1994**
(21) Anmeldenummer: 94100461.6
(22) Anmeldetag: 13.01.1994
(51) Int. Cl.: E05B 49/00

(54) **Fahrzeug-Schliesssystem**

(30) Priorität: 20.01.1993 DE 4301413
(71) Anmelder: SIEMENS AKTIENGESELLSCHAFT, D-80333 München (DE)
(72) Erfinder: Hiebl, Johann, D-93170 Bernhardswald (DE); Löffler, Maximilian, D-93170 Bernhardswald (DE)

(57) **Zusammenfassung**

Fahrzeug-Schließsystem, das durch einen elektronisch wirkenden, einen Code abgebenden Sender/Schlüssel betätigbar ist und das bei seiner Betätigung - insbesondere beim Öffnen einer Fahrzeugtüre - auf eine Wegfahrsperre - z.B. auf einen Schalter des Anlassers und/oder der Motorzündung - einwirkt, wobei eine Registriereinrichtung angebracht ist, welche zumindest angenähert und zumindest indirekt die aktuelle Spannung der Energiequelle des Senders/Schlüssels feststellt und eine den Benutzer warnende Anzeige auslöst, falls die Spannung der Energiequelle deutlich nachgelassen hat oder zumindest nachzulassen droht.

## Beschreibung

Die Erfindung betrifft ein Schließsystem gemäß dem Oberbegriff des Patentanspruches 1, das für sich bekannt ist.

Die Aufgabe,
- die Zuverlässigkeit des Schließsystems auch dann zu gewährleisten, wenn die Energiequelle im Sender/Schlüssel nachläßt,
wird durch die im Patentanspruch 1 angegebenen Maßnahmen gelöst.

Die Erfindung wird anhand der in den beiden Figuren gezeigten Beispielen von Diagrammschemen weiter erläutert.

Die Erfindung betrifft also ein Schließsystem für ein Fahrzeug. Die Erfindung wurde zwar vor allem für ein Kraftfahrzeug entwickelt. Sie eignet sich aber auch für andere Fahrzeuge wie Schienenfahrzeuge, Schiffe und dergleichen.

Dabei handelt es sich jeweils um ein Fahrzeug-Schließsystem, das durch einen elektronisch wirkenden, einen Code abgebenden Sender bzw. Schlüssel gesteuert wird. Diese Codeabgabe kann zum Beispiel durch eine Infrarotfernübertragung oder Funkübertragung erreicht sein. Der Sender/ Schlüssel kann jedoch auch z.B. eine elektronische Einheit enthalten, welche erst in unmittelbarer Nähe des im Fahrzeug angebrachten Empfängers induktiv wirksam ist.

Eine weitere Besonderheit des durch die Erfindung weitergebildeten Schließsystems besteht darin, daß das Fahrzeug eine Wegfahrsperre enthält. Solche Wegfahrsperren bestehen darin, daß sie eine Einrichtung darstellen, welche das Wegfahren des Fahrzeugs auch dann verhindern, falls das Fahrzeug ohne Zuhilfenahme des elektronisch wirkenden Codes geöffnet wurde - wenn also z.B. mittels eines mechanischen Schlüssels die Fahrzeugtüren geöffnet wurden. Solche Wegfahrsperren werden z.B. dadurch realisiert, daß die Zündung des Motors und/oder das Anlassen des Anlassers verhindert wird, solange noch keine einwandfreie elektronische Steuerung des Schließsystems erfolgte. Erst wenn das Schließsystem einwandfrei mittels des Codes gesteuert wurde, wird auch die Wegfahrsperre durch das Schließsystem aufgehoben - nämlich im allgmeinen zusammen mit der durch eine Zentralverriegelung bewirkten Öffnung der Türen aufgehoben.

Erfindungsgemäß ist im Schließsystem eine Registriereinrichtung angebracht, welche - zumindest angenähert und zumindest indirekt - die akturelle Restspannung der Energiequelle des Senders/Schlüssels feststellt und welche den Benutzer rechtzeitig warnt, falls die Restspannung zu stark nachläßt oder zumindest falls die Gefahr besteht, daß demnächst die Restspannung zu stark nachlassen könnte.

Dazu kann die Registriereinrichtung entweder unmittelbar die Restspannung messen und z.B. eine im Sender/Schlüssel angebrachte Warnlampe als optische Anzeige und/oder eine akustische Anzeige betätigen - aus Stromersparnisgründen diese Anzeige z.B. dann betätigen, solange der Benutzer den Sender/Schlüssel zum Betätigen des Schließsystems mittels eines Drucknopfes aktiviert.

Die Warnung kann aber - zusätzlich oder alternativ - auch dadurch erfolgen, daß die Registriereinrichtung - zumindest Teile davon - im Fahrzeug selbst angebracht ist, wobei diese Registereinrichtung eine im Fahrzeug angebrachte Anzeige, z.B. Warnlampe steuert. Diese im Fahrzeug angebrachte Registriereinrichtung kann dazu z.B. den Pegel der codierten Signale messen, welche vom Sender/ Schlüssel empfangen wurden und daraus indirekt Rückschlüsse auf die Restspannung des Energiespeichers des Senders/Schlüssels ziehen. Diese im Fahrzeug angebrachte Registriereinrichtung kann jedoch - alternativ oder zusätzlich - auch auf die das Starten des Motors steuernde Elektronik einwirken und z.B. den Motor erst nach einem mehrfachen Startversuch (z.B. dreifachen) starten, um so dem Benutzer anzuzeigen, daß die Restspannung inzwischen bedenklich nachläßt bzw. daß der Benutzer den Energiespeicher im Sender/Schlüssel in einer Werkstatt erneuern lassen müßte.

Im Prinzip kann die Erfindung auch so weitergebildet werden, daß die Wegfahrsperre selbst dann aufgehoben wird, wenn der übertragene Code zwar nicht mehr zu 100 % dem Sollwert entspricht, aber wenn dieser übertragene Code in für zu geringe Restspannung typischerweise geringfügig vom Soll-Wert abweicht.

Bei einer Weiterbildung kann auch eine weitere Anzeige, z. B. Warnlampe, oder ein spezieller, auffallend andersartiger Betrieb dieser Anzeige vorgesehen sein für Fälle, in welchen die Registriereinrichtung feststellt, daß die Spannung inzwischen extrem stark abgefallen ist, obwohl der Benutzer trotz früherer Warnungen noch nicht den Energiespeicher erneuern ließ. Diese besondere Anzeige bei sehr starkem Abfall der Restspannung soll den Benutzer veranlassen, nun unverzüglich Abhilfe anzustreben, z.B. dem Benutzer veranlassen einen Ersatzsender/Ersatzschlüssel zu benutzen.

Die Registriereinrichtung kann, statt die Restspannung unmittelbar zu messen, auch indirekt diese Restspannung überwachen. Dazu kann die Registriereinrichtung z.B. die Anzahl der bisherigen Übertragungen von Codes zählen. Diese Anzahl entspricht angenähert dem Ladezustand des Energiespeichers, so daß die Registriereinrichtung bei Erreichen einer bestimmten Anzahl von Übertragungen vorsorglich den Benutzer auffordern kann, einen Wechsel des Energiespeichers zu veranlassen.

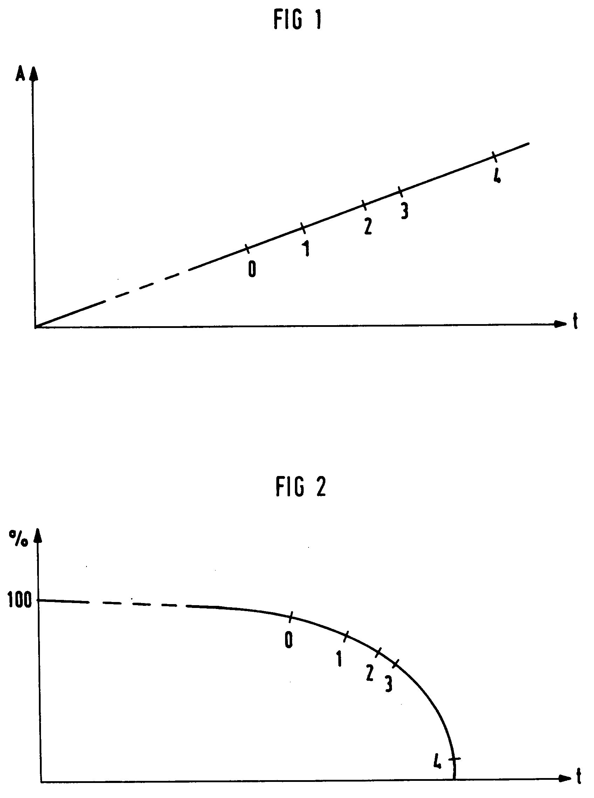

In der Figur 1 ist beispielhaft und schematisch ein solcher Betrieb abhängig von der Zeit t gezeigt, bei welchem abhängig von der Anzahl A der Betätigungen zunächst eine Anzeige - z.B. eine erste Warnlampe oder eine erste Betriebsart der Warnlampe - betätigt wird, vgl. den Punkt 0. Steigt die Anzahl A der Betätigungen des Schließsystems weiter an, ohne daß der Energiespeicher gewechselt wurde, wird bei Punkt 1 z.B. die Zentralverriegelung "zur Strafe" nicht mehr durch den Code betätigt, wenn auch die Wegfahrsperre dann noch betätigt wird. In diesem Falle dient also die Nichtbetätigung der Zentralverriegelung als Warnung an den Benutzer, endlich den Energiespeicher auswechseln zu lassen.

Wenn der Benutzer dann immer noch nicht den Energiespeicher auswechseln ließ, wird bei weiter steigender Anzahl A der Betätigungen, im gezeigten Beispiel bei Punkt 2, "zur Strafe" erst nach jedem n-ten - z.B. nach dem dritten - Startversuch wirklich gestartet, aber vorher das Wegfahren verhindert. Dies stellt eine weitere Steigerung der Warnung an den Benutzer dar, den Energiespeicher erneuern zu lassen.

Bei noch weiterer Steigerung der Anzahl A der Betätigungen, vgl. Punkt 3, ohne Wechsel des Energiespeichers wird eine zweite Anzeige, z.B. zweite Warnlampe oder eine zweite Betätigungsweise der Warnlampe, in Betrieb gesetzt, bevor durch noch weitere Betätigungen des Senders/Schlüssels bei Punkt 4 schließlich die Batterie/der Energiespeicher endgültig leer ist.

Wenn hingegen die Registriereinrichtung nicht die Anzahl A der Betätigungen, sondern mehr oder weniger unmittelbar die Restspannung selbst mißt, dann kann in ähnlicher Weise, vgl. den Punkt 0, z.B. gemäß der Figur 2 ab einem gewissen Abfall der Restspannung zunächst eine Warnung, z.B. durch wieder Aufleuchten der Warnlampe erfolgen. Bei stärkerem Abfall der Spannung kann dann beispielhaft bei Punkt 1 auch hier die Zentralverriegelungsfunktion durch Fernbedienung des Schließsystems ausfallen, obwohl trotz dieses Ausfalls die Wegfahrsperre aufgehoben wird, damit der Benutzer mit einem mechanischen Schlüssel das Fahrzeug noch immer öffnen und den Motor anlassen kann.

Sollte der Benutzer dann immer noch nicht die Warnung befolgt haben, dann wird schließlich bei dem in der Figur 2 gezeigten Beispiel eine weitere Anzeige, z.B. eine Warnlampe, betätigt, welche im Sender/Schlüssel und/oder im Fahrzeug angebracht sein kann, vgl. den Punkt 2 in der Figur 2.

Bei dem Punkt 3 in der Figur 2 wird schließlich der Motor erst z.B. nach jedem zweiten oder dritten oder fünften Versuch gestartet, um den Benutzer noch eindringlicher zu warnen.

Der Punkt 4 in der Figur 2 zeigt schematisch, daß dann nur noch mit einem Ersatzsender/Ersatzschlüssel das Fahrzeug benutzt werden kann, falls der Benutzer bis dahin nicht den Energiespeicher auswechseln ließ.

Der Energiespeicher kann z.B. eine Batterie sein. Es kann jedoch auch in Sonderfällen ein anderer Energiespeichertyp angebracht sein. Diese Energiespeicher kann im Prinzip auch durch den Benutzer selbst gewechselt werden. Es kann auch vorgesehen sein, daß der Benutzer oder eine Person in der Werkstatt den Energiespeicher wieder aufladen kann.

Es kann auch vorgesehen sein, daß in Werkstäten regelmäßig die Energiespeicher des Senders/Schlüssels und/oder der von Ersatzsendern/Ersatzschlüsseln im Rahmen der normalen Serviceleistungen regelmäßig ausgetauscht werden.

## Patentansprüche

1. Fahrzeug-Schließsystem, das durch einen elektronisch wirkenden, einen Code abgebenden Sender/Schlüssel betätigbar ist und das bei seiner Betätigung - insbesondere beim Öffnen einer Fahrzeugtüre - auf eine Wegfahrsperre - z.B. auf einen Schalter des Anlassers und/oder der Motorzündung - einwirkt,
**dadurch gekennzeichnet,**
- daß eine Registriereinrichtung angebracht ist, welche zumindest angenähert und zumindest indirekt die aktuelle Spannung der Energiequelle des Senders/Schlüssels feststellt und eine den Benutzer warnende Anzeige aus-löst, falls die Spannung der Energiequelle deutlich nachgelassen hat oder zumindest nachzulassen droht.

2. Schließsystem nach Patentanspruch 1,
**dadurch gekennzeichnet**,
- daß die Registiereinrichtung die Anzahl der Betätigungen des Schließsystems seit der (Re-) Initialisierung feststellt.

3. Schließsystem nach Patentanspruch 1 oder 2
**dadurch gekennzeichnet**,
- daß die Anzeige eine Warnlampe ist.

4. Schließsystem mit fernsteuerndem Sender, nach Patentanspruch 1, 2 oder 3,
**dadurch gekennzeichnet**,
- daß die Anzeige eine Nichtbetätigung der Zentralverriegelung ist, so daß bei Betätigung des Senders nur die Wegfahrsperre aufgehoben wird.

5. Schließsystem nach Patentanspruch 4,
**dadurch gekennzeichnet**,
- daß die Wegfahrsperre erst nach mehrmaligen Startversuchen aufgehoben wird.
